# EUROPEAN PATENT SPECIFICATION

(11) **EP 0 438 319 B1**
(45) Date of publication and mention of the grant of the patent: **22.03.1995**
(21) Application number: 91300406.5
(22) Date of filing: 18.01.1991
(51) Int. Cl.: B60C 11/04

(54) **Pneumatic radial tires**
Radialluftreifen
Pneumatiques à carcasse radiale

(30) Priority: 18.01.1990 JP 7045/90
(43) Date of publication of application: 24.07.1991
(73) Proprietor: Bridgestone Corporation, Tokyo 104 (JP)
(72) Inventor: Ushikubo, Hisao, Kodaira City, Tokyo (JP)
(74) Representative: Whalley, Kevin

(56) References cited:
- EP-A- 0 325 905
- DE-A- 2 912 546
- US-A- 4 796 683
- US-A- 4 832 099
- US-A- 4 884 607

## Description

This invention relates to pneumatic radial tires for passenger cars, and more particularly to a radial tire having a herringbone type tread pattern and an aspect ratio of not more than 0.6 and being durable at very high speed running.

Passenger cars can be stably run at a very high speed exceeding 240 km/hr with the availability of expressway networks and the technical development of passenger cars, and consequently it is demanded to develop tires having sufficient performances for running at such high speed, i.e. tires having high drainage property and cornering performances at very high speed running and excellent uneven wear resistance.

In tires of this type, as a tread having in particular an improved drainage property, there is known a so-called unidirectional pattern comprising a plurality of relatively wide circumferential grooves arranged along the circumference of the tread, and lateral grooves extending from the tread end across the circumferential grooves so as to focus to the central circumference, in which the ground contacting of the same lateral grooves is gradually conducted outward from a portion near to the tread center during running under a load.

In such a tread pattern, the lateral grooves obliquely cross with the circumferential groove, so that corner parts of an island portion defined by the lateral groove and the circumferential groove at the side of the same circumferential groove has an obtuse angle and acute angle. Since the corner part having the obtuse angle has high rigidity as compared with the corner part having the acute angle, it is apt to be worn, and hence uneven wear is caused in the island portion in the circumferential direction. Such uneven wear becomes remarkable in an island portion between the circumferential grooves and located near to the tread center because the island portion located near to the tread end falls down toward the tread center in the cornering at high speed.

Attention is drawn to the disclosures of DE-A-2912546 and EP-A-0325905.

It is an aim of the invention to provide a pneumatic radial tire having an improved uneven wear resistance even when the tread has a unidirectional pattern, and having excellent drainage property during high speed running.

The inventor has found that in order to avoid the aforementioned uneven wear, it is advantageous to adopt a rigidity balance in the circumferential direction of the island portion, that is it is advantageous to arrange a zigzag circumferential groove crossing with the lateral grooves and to make the cross angle between the circumferential groove and the lateral groove approach a right angle. However, it has been found that the zigzag arrangement of the circumferential groove brings about a disadvantage of considerably degrading the drainage property provided by the circumferential groove disposed along the circumference of the tread. The inventor has made further studies of the drainage property in the tread pattern including zigzag arranged circumferential grooves and found a means for improving the drainage property, and as a result the invention has been accomplished.

The present invention provides a pneumatic radial tire comprising a cylindrical crown portion, a sidewall portion extending inward from each end of the crown portion in the radial direction, a radial carcass extending from one of the sidewall portions through the crown portion to the other sidewall portion to reinforce the said portions, and an inextensible belt layer and a tread successively arranged outside the carcass on the crown portion in the radial direction; said tread being provided with a zigzag extending main groove located between a tread end (T) and the center circumference (O) of the tread in the circumferential direction and lateral grooves extending from the tread end (T) across the main groove so as to focus to the center circumference (O), said main groove being repeatedly comprised of a first element (Y₁) extending inclined with respect to the center circumference and a second element (Y₂) extending to cross with the first element in common with the lateral groove , wherein said first element (Y₁) is such that a cross angle (α) between a center line (L) of groove width and the center circumference (O) at a groove opening portion of said main groove near the tread surface is larger than a cross angle (β) between a center line (ℓ) of groove width and the center circumference (O) at a groove bottom portion of said main groove, so that the main groove has a zigzag form at the groove opening portion and a straight form extending substantially in parallel to the center circumference (O) at the groove bottom portion.

The invention will be further described, by way of example only, with reference to the accompanying drawings, wherein:
Fig. 1 is a developed view of an embodiment of the tread pattern of a tire according to the invention;
Figs. 2a to 2c are sectional views taken along lines IIa-IIa, IIb-IIb and IIc-IIc of Fig. 1, respectively;
Fig. 3 is a developed view of a main part of another embodiment of the tread pattern of a tire according to the invention;
Figs. 4a to 4c are sectional views taken along lines IVa-IVa, IVb-IVb and IVc-IVc, respectively; and
Fig. 5 is a developed view of a conventional tread pattern.

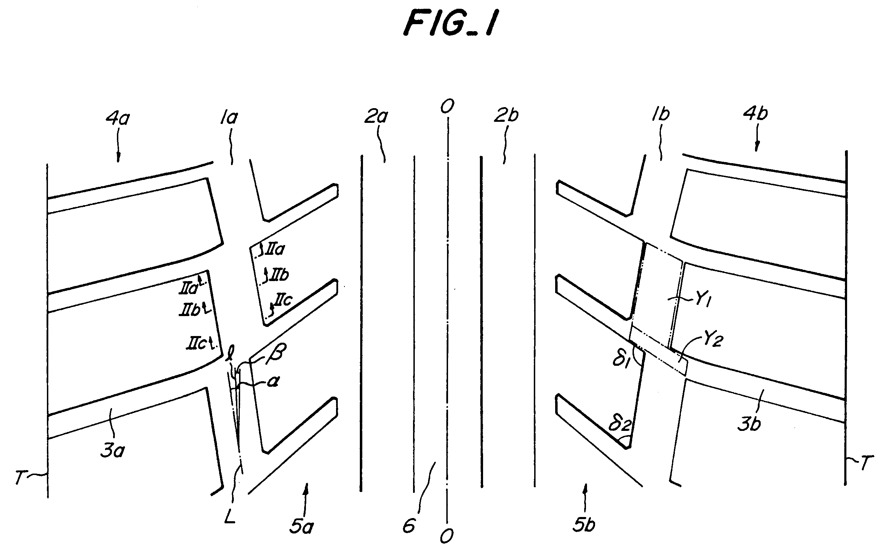

In Fig. 1 is shown a main part of the tread of a pneumatic radial tire according to the invention. This tread is divided into a pair of longitudinal rows 4a, 4b each comprised of blocks located near to the tread end T, a pair of deformed rib rows 5a, 5b located near to the center circumference or equator O and a rib 6 located at the central portion of the tread by a pair of main grooves 1a, 1b zigzag extending substantially along the center circumference O of the tread and located at both sides with respect to the center circumference O, a pair of circumferential grooves 2a, 2b extending at both sides with respect to the center circumference O in the central portion of the tread and in parallel to the center circumference O and many lateral grooves 3a, 3b extending from the tread end T across the main groove 1a or 1b so as to focus to the center circumference O in a herringbone fashion. The tire having such a unidirectional pattern is used by mounting onto a vehicle so as that the focusing direction of the lateral groove corresponds to the rotating direction of the tire.

Although one main groove is arranged at each side of the tread in the illustrated embodiment, 1 to 4 main grooves may be arranged at each side of the tread. When a plurality of main grooves are arranged between the tread end and the center circumference O, the depth of the main groove near to the center circumference O may preferably be made deep.

It is preferable that the angle of the lateral grooves 3a, 3b with respect to the center circumference O is 50-90° at a region ranging from the tread end T to the main groove 1a, 1b and 20-70° at a region ranging from the main groove 1a, 1b to the circumferential groove 2a, 2b, in which the latter angle is always smaller than the former angle. Furthermore, it is possible that the width of the lateral groove is gradually increased from the center circumference O toward the tread end T or the groove depth is equal to or less than that of the main groove.

Each of the main grooves 1a, 1b is repeatedly comprised of a first element Y₁ extending inclined toward the tread end T with respect to the center circumference O and a second element Y₂ crossing to the first element Y1 and extending in common with the lateral groove 3a or 3b. The second element Y₂ uniformly extends in the form of a general U or V shaped section likewise the lateral groove.
In the first element Y₁, the groove opening portion near to the tread surface is inclined so as to define an angle α between a center line L of the width of the main groove and the center circumference O, while the groove bottom portion is formed so that an angle β between a center line ℓ and the center circumference O is made smaller than the angle α ; the angle β becomes preferably zero. The angles α and β are preferably α: 5-15° and β: 0-10°, respectively.

As a result, the main groove has a zigzag form at the groove opening portion and a straight form extending substantially in parallel to the center circumference O at the groove bottom portion.

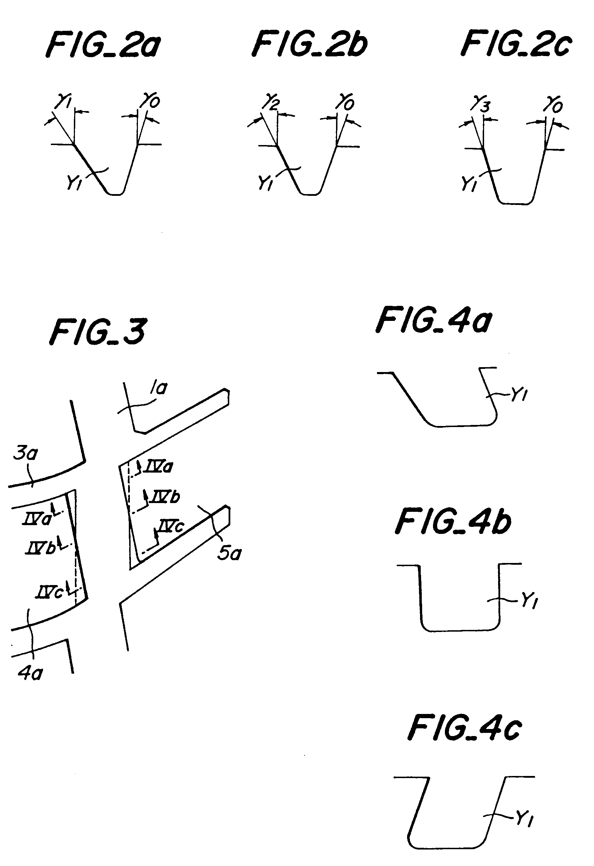

In the first element Y₁, the difference in the form between the groove opening portion and the groove bottom portion as mentioned above can be achieved, for example, by gradually increasing the inclination of the groove wall near to the tread end in the focusing direction of the lateral groove. That is, as shown by sections taken along lines IIa-IIa, IIb-IIb and IIc-IIc of Fig. 1 in Figs. 2a to 2c, the groove wall is formed so that an angle of groove wall near to the tread end with respect to a normal line of a profile of the tread surface drawn on an edge of an opening of the groove satisfies a relation of γ₁>γ₂>γ₃. On the other hand, the groove wall near to the center circumference is formed at a constant inclination angle γ₀, in which the angle γ₀ is set to be approximately equal to γ₃. Moreover, the inclination of the groove wall may continuously change as mentioned above or may stepwise change having bending point(s).

As the structure of the first element Y₁ in the main groove, an embodiment shown in Figs. 3 and 4 is advantageously adapted in addition to the above illustrated embodiment. In the embodiment of Figs. 3 and 4, the groove wall near to the tread end is gradually inclined toward the side of the tread end in a region extending in the focusing direction of the lateral groove around a center in the longitudinal direction of the first element (see Fig. 4b) and also the groove wall near to the opposed center circumference is gradually inclined toward the side of the tread end, while both the groove walls are gradually inclined toward the side of the center circumference in a region opposite to the focusing direction.

Although each, of the above tread patterns is symmetric with respect to the center circumference, it is possible to shift the pitch of the pattern at both sides of the center circumference to each other in the circumferential direction of the tire, and further the pattern may be unsymmetric with respect to the center circumference.

Furthermore, the other structure of the tire according to the invention may be the same as in a conventional tire.

That is, the carcass is at least one ply (3 plies at most) wound around a bead core from the inside of the tire toward the outside thereof and containing fiber cords such as rayon fiber cord, nylon fiber cord, polyester fiber cord or the like arranged substantially in a direction perpendicular to an equator of the tire (radial direction). The belt is comprised of at least two main belt layers each containing inextensible cords such as steel cord, aromatic polyamide fiber cord or the like arranged at an angle of 10-35° with respect to the equator of the tire, cords of which layers being crossed with each other, and at least one auxiliary belt layer containing heat-shrinkable cords such as nylon cord or the like arranged substantially in parallel to the equator of the tire over the full width of the main belt layer. The auxiliary belt layer is formed by spirally winding a ribbon comprised of a plurality of cords along the periphery of the main belt layer. Then, the tread is disposed on the belt.

Although the illustrated tire has a symmetric tread pattern with respect to the equator of the tire, the invention is naturally applicable to tires having a unsymmetric tread pattern.

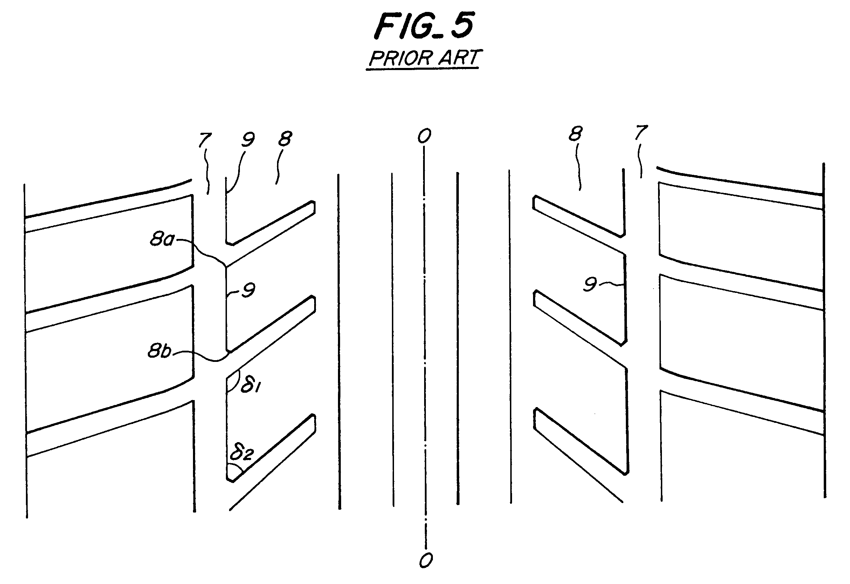

In the conventional unidirectional tread pattern shown in Fig. 5, a force from the side of the tread end during the rotation of the tire, particularly force in the cornering is applied to a side groove wall 9 of an island portion 8 defined by a groove 7 along the center circumference O of the tread. When a lateral groove 3 is focused toward the center circumference O, corner parts 8a and 8b of the island portion 8 located at both ends of the side groove wall 9 have an obtuse angle and an acute angle, so that difference in rigidity between the corner parts is caused to induce uneven wear.

On the contrary, in the tire having the zigzag arranged main groove according to the invention, the cross angle between the main groove and the lateral groove in the vicinity of the tread surface approaches a right angle, so that the difference in the angle between the corner parts of the island portion can be reduced and the rigidity difference becomes very small.

In the tire according to the invention, the improvement of uneven wear resistance can be achieved by arranging the zigzag main groove as mentioned above. On the other hand, there is no straight groove extending along the circumference of the tread, so that degradation of the drainage property may caused, but the drainage property can be ensured by the following means.

That is, the groove bottom portion of the first element Y₁ in the main groove extends substantially in parallel to the center circumference O in a direction opposite to the direction in the groove opening portion, whereby the groove bottom portion of the main groove is substantially continued in straight form to ensure the drainage property equal to that of the conventional technique.

The following example is given in illustration of the invention and is not intended as limitation thereof.

There was prepared a pneumatic radial tire having a tire size of 255/40 ZR17 according to a tread pattern shown in Fig. 1 and a groove structure shown in Fig. 2. This test tire had the following specifications:
(1) Main groove
   [first element Y₁]
   opening width of groove: 10 mm
   depth: 8 mm
   inclination angle α at groove opening portion: 10°
   inclination angle β at groove bottom portion: 0°
   inclination angle of groove wall
   γ₀: 10°, γ₁: 30°,
   γ₂: 20°, γ₃: 10°
   [second element Y₂]
   length: 5 mm (width and depth are the same as in lateral groove)
(2) Circumferential groove
   width: 12 mm
   depth: 8 mm
(3) Lateral groove
   width: 5 mm
   depth: 7 mm
   focusing angle with respect to
   center circumference O: 60°
(4) Island portion
   angle of corner part
   δ₁: 115°
   δ₂: 65°

Similarly, a comparative tire having the same tire size as mentioned above was prepared according to a tread pattern shown in Fig. 5. Moreover, the angle of corner part in the island portion of this tire was δ₁: 50° and δ₂: 125°.

These tires were subjected to uneven wear test and drainage test to obtain results as shown in the following table.

**Table 1**

| | Test tire | Comparative tire |
|---|---|---|
| Uneven wear resistance | 120 | 100 |
| Drainage property | 100 | 100 |

Moreover, each test was made by mounting the tire onto a passenger car under an internal pressure of 2.5 kgf/cm² and running by means of a professional driver. The evaluation was represented by an index on the basis that the comparative tire was 100.

In the uneven wear test, the cornering of the car on a curved road having a radius of 50 m at a speed of 70 km/hr was repeated 20 times, and thereafter an amount stepwise worn at the block after the running was measured.

In the drainage test, the car was run from a dry road surface onto a wet road surface having a water depth of 10 mm in a test course having a radius of 90 m while gradually increasing the running speed from 50 km/hr to 70 km/hr, during which a change of lateral acceleration speed approached from the dry road surface to the wet road surface was measured.

As mentioned above, according to the invention, the improvement of uneven wear resistance in high-speed cornering can be attained without sacrificing the excellent drainage property, so that there can be provided tires suitable for not only middle to high speed running vehicles but also very high speed running vehicles.

## Claims

1. A pneumatic radial tire comprising a cylindrical crown portion, a sidewall portion extending inward from each end of the crown portion in the radial direction, a radial carcass extending from one of the sidewall portions through the crown portion to the other sidewall portion to reinforce the said portions, and an inextensible belt layer and a tread successively arranged outside the carcass on the crown portion in the radial direction; said tread being provided with a zigzag extending main groove (1a, 1b) located between a tread end (T) and the center circumference (O) of the tread in the circumferential direction and lateral grooves (3a, 3b) extending from the tread end (T) across the main groove (1a, 1b) so as to focus to the center circumference (O), said main groove (1a, 1b) being repeatedly comprised of a first element (Y₁) extending inclined with respect to the center circumference and a second element (Y₂) extending to cross with the first element in common with the lateral groove (3a, 3b), wherein said first element (Y₁) is such that a cross angle (α) between a center line (L) of groove width and the center circumference (O) at a groove opening portion of said main groove (1a, 1b) near the tread surface is larger than a cross angle (β) between a center line (ℓ) of groove width and the center circumference (O) at a groove bottom portion of said main groove, so that the main groove (1a, 1b) has a zigzag form at the groove opening portion and a straight form extending substantially in parallel to the center circumference (O) at the groove bottom portion.

2. A pneumatic radial tire as claimed in claim 1, characterized in that said lateral groove (3a, 3b) is inclined with respect to said center circumference (O) at an angle of 50-90° in a region between said tread end (T) and said main groove (1a, 1b) and at an angle of 20-70° in a region ranging from said main groove (1a, 1b) toward said center circumference (O), and in that the said latter angle is smaller than the said former angle.

3. A pneumatic radial tire as claimed in claim 1 or 2, characterized in that the said cross angle (α) is 5-15° and the said cross angle (β) is 0-10°.

## Patentansprüche

1. Radialer Luftreifen mit einem zylindrischen Kronenbereich, einem Seitenwandbereich, der sich von den beiden Rändern des Kronenbereichs in der radialen Richtung nach innen erstreckt, einer radialen Karkasse, die sich von einem der Seitenwandbereiche über den Kronenbereich bis zu dem anderen Seitenwandbereich erstreckt, um diese Bereiche zu verstärken, und einer undehnbaren Gürtelschicht und einer Lauffläche, die außerhalb der Karkasse auf dem Kronenbereich in der radialen Richtung nacheinander angeordnet sind; wobei die Lauffläche versehen ist mit einer zickzackförmig verlaufenden Hauptrille (1a, 1b), die zwischen einem Laufflächenrand (T) und dem Mittenumfang (O) der Lauffläche in der Umfangsrichtung gelegen ist, und mit seitlichen Rillen (3a, 3b), die sich von dem Laufflächenrand (T) quer über die Hauptrille (1a, 1b) erstrecken und zu dem Mittenumfang (O) hin konvergieren, wobei diese Hauptrille (1a, 1b) in sich wiederholender Weise besteht aus einem ersten Element (Y₁), das bezüglich des Mittenumfangs geneigt ist, und einem zweiten Element (Y₂), das gemeinsam mit der seitlichen Rille (3a, 3b) quer zu dem ersten Element verläuft, wobei das erste Element (Y₁) so angeordnet ist, daß ein Kreuzungswinkel (α) zwischen einer Mittellinie (L) der Rillenbreite und dem Mittenumfang (O) bei einem Rillenöffnungsbereich der Hauptrille (1a, 1b) nahe bei der Laufflächen-Oberfläche größer ist als ein Kreuzungswinkel (β) zwischen einer Mittellinie (ℓ) der Rillenbreite und dem Mittenumfang (O) bei einem Rillenbodenbereich der Hauptrille, so daß die Hauptrille (1a, 1b) bei dem Rillenöffnungsbereich eine Zickzackform hat, und bei dem Rillenbodenbereich eine geradlinige Form hat, die im wesentlichen parallel zu dem Mittenumfang (O) verläuft.

2. Radialer Luftreifen gemäß Anspruch 1, dadurch gekennzeichnet, daß die seitliche Rille (3a, 3b) bezüglich des Mittenumfangs (O) in einem Gebiet zwischen dem Laufflächenrand (T) und der Hauptrille (1a, 1b) unter einem Winkel von 50-90° geneigt ist, und in einem Gebiet, das von der Hauptrille (1a, 1b) bis zu dem Mittenumfang (O) reicht, unter einem Winkel von 20-70° geneigt ist, und daß der letztere Winkel kleiner als der erstere Winkel ist.

3. Radialer Luftreifen gemäß Anspruch 1 oder 2, dadurch gekennzeichnet, daß der Kreuzungswinkel (α) 5-15° beträgt, und der Kreuzungswinkel (β) 0-10° beträgt.

## Revendications

1. Bandage pneumatique radial comprenant une portion de couronne cylindrique, une portion de flanc s'étendant vers l'intérieur depuis chaque extrémité de la portion de couronne en direction radiale, une carcasse radiale s'étendant depuis une des portions de flancs à travers la portion de couronne jusqu'à l'autre portion de flanc pour renforcer lesdites portions, une couche de ceinture inextensible et une bande de roulement arrangées successivement à l'extérieur de la carcasse sur la portion de couronne en direction radiale; ladite bande de roulement étant munie d'une rainure principale (1a, 1b) s'étendant en zigzag, disposée entre une extrémité de bande de roulement (T) et la circonférence centrale (O) de la bande de roulement en direction circonférentielle, et des rainures latérales (3a, 3b) s'étendant depuis l'extrémité de bande de roulement (T) à travers la rainure principale (1a, 1b) en s'orientant vers la circonférence centrale (O), ladite rainure principale (1a, 1b) comprenant, de manière répétée, un premier élément (Y₁) s'étendant en inclinaison par rapport à la circonférence centrale et un second élément (Y₂) s'étendant de manière à croiser le premier élément, en commun avec la rainure latérale (3a, 3b), dans lequel ledit premier élément (Y₁) est tel qu'un angle de croisement (α) entre la ligne centrale (L) de la largeur de rainure et la circonférence centrale (O) à une portion d'ouverture de ladite rainure principale (1a, 1b), à proximité de la surface de bande de roulement, est supérieur à un angle de croisement (β) entre la ligne centrale (ℓ) de la largeur de rainure et la circonférence centrale (O) à une portion inférieure de ladite rainure principale, si bien que la rainure principale (1a, 1b) possède une forme en zigzag à la portion d'ouverture de rainure et une forme rectiligne s'étendant essentiellement en parallèle à la circonférence centrale (O) à la portion inférieure de rainure.

2. Bandage pneumatique radial selon la revendication 1, caractérisé en ce que ladite rainure latérale (3a, 3b) est inclinée par rapport à ladite circonférence centrale (O) en formant un angle de 50-90° dans une région s'étendant entre ladite extrémité de bande de roulement (T) et ladite rainure principale (1a, 1b), et en formant un angle de 20-70° dans une région s'étendant de ladite rainure principale (1a, 1b) à ladite circonférence centrale (O), et en ce que ledit angle mentionné en dernier lieu est inférieur audit angle mentionné en premier lieu.

3. Bandage pneumatique radial selon la revendication 1 ou 2, caractérisé en ce que ledit angle de croisement (α) est égal à 5-15° et ledit angle de croisement (β) est égal à 0-10°.
